# EUROPÄISCHE PATENTSCHRIFT

(11) **EP 1 530 861 B1**
(45) Veröffentlichungstag und Bekanntmachung des Hinweises auf die Patenterteilung: **13.05.2009**
(21) Anmeldenummer: 03783941.2
(22) Anmeldetag: 29.07.2003
(51) Int. Cl.: H04L 29/06, H04L 29/12, G08B 26/00, G08B 27/00

(54) **VERFAHREN ZUR VIDEO-OBJEKT BERWACHUNG UNTER VERWENDUNG EINES MOBILKOMMUNIKATIONSSYSTEMS**
METHOD FOR VIDEO MONITORING OBJECTS BY MEANS OF A MOBILE COMMUNICATION SYSTEM
PROCEDE DE SURVEILLANCE VIDEO D'OBJET AU MOYEN D'UN SYSTEME DE COMMUNICATION MOBILE

(30) Priorität: 29.07.2002 DE 10234644
(43) Veröffentlichungstag der Anmeldung: 18.05.2005
(73) Patentinhaber: T-Mobile Deutschland GmbH, 53227 Bonn (DE)
(72) Erfinder: MOSSAKOWSKI, Gerd, 59227 Ahlen (DE)
(74) Vertreter: Riebling, Peter
(86) Internationale Anmeldenummer: PCT/DE2003/002556
(87) Internationale Veröffentlichungsnummer: WO 2004/015951

(56) Entgegenhaltungen:
- WO-A-01/03402
- WO-A-01/31925
- WO-A-01/93546
- WO-A-02/01531
- WO-A-02/054677
- DE-A- 10 053 683

## Beschreibung

Die Erfindung betrifft ein Verfahren zur Video-Objektüberwachung unter Verwendung eines Mobilkommunikationssystems nach dem Oberbegriff des Patentanspruchs 1.

Für die unterschiedlichsten Überwachungsaufgaben gibt es unterschiedliche Technologien. Allen Technologien ist gemeinsam, dass in einer Sendeeinheit die Signale, wie z.B. Bild und Tondaten, zunächst mittels Mikrofon, Kamera, Sensoren, etc., aufgenommen und dann zu einer entfernt liegenden Empfangsstelle übertragen werden. Diese Empfangsstellen können z.B. als Überwachungsmonitore in Sicherheitszentralen, Babyphon-Empfänger, etc. ausgebildet sein.

Die zur Übertragung der Daten benutzten Technologien lassen sich zunächst in Technologien für den Nahbereich und Technologien für den Fernbereich klassifizieren.

Im Nahbereich, meist einer Entfernung zwischen Sender und Empfänger von weniger als 300m, erfolgt eine Übertragung der Daten über eine direkte Kabelverbindung oder auch über Funkübertragung. Im Fall der Funkübertragung werden Systeme verwendet, die eine direkte Funkverbindung zwischen Sender und Empfänger benutzen. Das hat den Nachteil, dass die Empfangsstelle sehr nah an dem zu überwachenden Objekt oder Bereich liegen muss. Ein Beispiel für ein derartiges Videoüberwachungssystem ist in der EP 1 124 355 A2 beschrieben. Hierbei werden die Videodaten von einer Kamera aufgezeichnet, und zur Übertragung der Videodaten eine schnurlose Telefonanlage verwendet. Das Videobild kann auf der Anzeige des schnurlosen Telefons betrachtet werden.

Im Fernbereich wird im Bedarfsfall eine Wählverbindung zwischen dem Sender und dem Empfänger über ein öffentliches Kommunikationsnetz aufgebaut. Der Aufbau der Wählverbindung kann in Abhängigkeit von einem auslösenden Ereignis (Trigger) erfolgen, der zum Beispiel durch Bewegungssensoren oder in regelmäßigen zeitlichen Abständen ausgelöst wird. Es ist auch bekannt, Videoübertragungen von sogenannten WebCams über das Internet durchzuführen. Eine solche Fernübertragung von Videosignalen über ein ISDN-Netz bzw. ein Mobilfunknetz C ist aus der DE 41 26 105 A1 bekannt.

Die WO 02 01531 A1 offenbart ein Alarmsystem, bei dem in einem zu überwachenden Objekt verschiedenartige Sensoren, unter anderem auch Überwachungskameras, angeordnet sind, deren Signale an eine automatische Auswerteeinrichtung übermittelt werden. Werden durch die Sensoren und die Auswerteeinrichtung außergewöhnliche Aktivitäten erfasst, so wird ein Alarmsignal ausgelöst und an eine zentrale Alarmeinrichtung gemeldet. Von dort kann das Alarmsignal an den Benutzer des Alarmsystems und an andere vorherbestimmte Stellen weitergeleitet werden. Der Benutzer hat z.B. über ein Internetportal oder sein Mobiltelefon Zugang zur zentralen Alarmeinrichtung und kann dort Informationen über sein persönliches Alarmsystem abfragen und Einstellungen vornehmen. Der Zugang zum zentralen Alarmsystem ist durch eine Identifizierung mittels Benutzername und Passwort gesichert.

WO 02 054677 A1 offenbart ein Verfahren zur Bereitstellung von Telekommunikationsdienstleistungen in einem Mobilkommunikationssystem, wobei eine Datenübertragung zwischen einer Mobilstation des Mobilkommunikationssystems und einem Terminal eines anderen drahtlosen Netzwerks, z.B. WLAN, GSMLAN, ermöglicht wird.

Die WO 01 03402 A1 betrifft ein Verfahren zur Authentifikation eines Teilnehmers eines ersten Kommunikationsnetzes in einem zweiten Kommunikationsnets, wobei dem Teilnehmer im zweiten Kommunikationsnetz eine Adresse zugeteilt wird, die Adresse mit der im ersten Kommunikationssystem vorliegenden Identität des Teilnehmers verknüpft und der Teilnehmer anhand dieser Identität im zweiten Kommunikationsnetz authentisiert wird. WO 01 31925 A1 offenbart ein Verfahren und ein System zur Videoüberwachung, bei dem das Videosignal von einer Videokamera aufgenommen und über ein Mobilkommunikationsnetz an einen Empfänger, z.B. ein videofähiges Mobiltelefon, übertragen wird. Eine spezielle Berechtigungsprüfung des Empfängers ist nicht vorgesehen.

Bei allen Übertragungsverfahren ist es jedoch sicherzustellen, dass nur ein berechtigter Empfänger die Videodaten des Senders empfangen kann. Bei einer Wählverbindung kann dies z.B. durch eine Abfrage eines Benutzemamens in Kombination mit einem Passwort erfolgen, und im Internet durch bekannten Schlüsselverfahren (z.B. Zertifikate).

Dabei hat jeweils der Sender und Empfänger für ein sicheres Übertragungsverfahren zu sorgen, welches jedoch für nicht versierte Techniker nur schwer durchzuführen ist.

Die Aufgabe der Erfindung besteht darin, ein Verfahren zur Video-Objektüberwachung unter Verwendung eines Mobikommunikationssystems anzugeben, bei dem ein Benutzer einfach und ohne technischen Sachverstand eine sichere Videoübertragung über das Mobilkommunikationssystem durchführen kann.

Diese Aufgabe wird erfindungsgemäß durch die Merkmale des Patentanspruchs 1 gelöst.

Die Erfindung beruht darauf, dass vor oder während des Verbindungsaufbaus durch eine Einrichtung des Mobilkommunikationssystems geprüft wird, ob der Empfänger zum Empfang von Videodaten des Senders berechtigt ist.

Vorteilhafte Ausgestaltungen und Weiterbildungen der Erfindung sind in den abhängigen Patentansprüchen angeführt.

Gegenüber dem Stand der Technik hat die Erfindung folgende Vorteile:
- Das Verfahren ermöglicht eine größtmögliche Mobilität durch mobile Überwachungsendgeräte.
- Es ist keine Leitungsanbindung, z.B. über ein öffentliches Festnetz notwendig.
- Eine Übertragung der Videodaten in den Fernbereich ist ohne weiteres möglich und wird nur durch die Reichweite des Mobilkommunikationssystems begrenzt.
- Es kann eine bestehenden Mobilfunk-Infrastruktur, z.B. (GSM/UMTS), zur Übertragung der Videodatengenutzt werden.
- Es kann das dem Mobilkommunikationssystem eigene, etablierte Identifizierungsverfahren, z.B. mittels SIM-Karte, zur kommunikationsnetzseitigen oder gegenseitigen Identifikation von Sender und Empfänger verwendet werden.
- Es kann eine Personalisierung von Sender und Empfänger entsprechend der staatlichen Vorgaben durchgeführt werden (z.B. G10 in Deutschland).

Ziel der Erfindung ist es, dem Benutzer ein Übertragungsverfahren und ein hierfür geeignetes Gerätepaar anzubieten, welches komplett vorkonfiguriert ist. Das Gerätepaar besteht aus einem Sender und einem Empfänger. Der Sender umfasst eine Videokamera, ein Mikrofon, bedarfsweise weitere Sensoren, z.B. Bewegungsmelder, und eine GSM/UMTS Funkeinheit. Alle diese Einheiten sind vorzugsweise in einem kompakten Gerät integriert. Sie können aber auch als einzelne Einheiten ausgebildet und untereinander über Verbindungskabel oder eine drahtlose Schnittstelle, z.B. Infrarot oder Bluetooth, miteinander verbunden sein. Der Empfänger ist ein GSM/UMTS Endgerät, das in der Lage ist, Bewegtbilder und Audiosignale wiederzugeben. Um mehr als einen Sender wahlweise empfangen und kontrollieren zu können, kann es vorgesehen sein, dass das empfangsseitige Endgerät eine Art "Browser" besitzt, z.B. basierend auf der WAP- oder (X)HTM-Technologie, mit dem der jeweils zu empfangende Sender ausgewählt werden kann. Der Aufbau einer Verbindung zwischen dem Sender und dem Empfänger erfolgt vorzugsweise über eine Anwahl der diesen jeweils zugeordneten Mobilteilnehmer-Rufnummer MSISDN. Sowohl der Sender als auch der Empfänger kann somit einen Verbindungsaufbau initiieren.

Eine andere Möglichkeit des Verbindungsaufbaus besteht in der Anwahl einer zugeordneten temporären IP-Adresse, die dem Sender und dem Empfänger zugewiesen wird.

Erfindungsgemäß kann sowohl der Sender als auch der Empfänger mit einer Videokamera ausgerüstet sein, so dass der Sender wahlweise als Empfänger und der Empfänger wahlweise als Sender verwendet werden kann.

Die Anwendungen dieses Verfahrens können vielfältiger Art sein.

Z.B. kann es als eine Art Babyphon mit Videokontrolle verwendet werden. Ferner ist eine Überwachung abgelegener Räume, z.B. Einbruchsüberwachung der eigenen Wohnung, dem Ferienhaus, oder Fabrik- und Gewerbegebäuden, etc, möglich. Eine andere Anwendung ist die Baustellenüberwachung oder Verkehrsüberwachung. Ferner ist eine mobile Krankenüberwachung denkbar. Eine Art mobile WAP-Cam ist ebenfalls realisierbar.

Bei allen diesen Anwendungen besteht der Vorteil, dass nur ein autorisierter Empfänger die Videodaten des Senders empfangen kann.

Ein mögliches Ausführungsbeispiel der Erfindung wird nachfolgen anhand der Zeichnungsfigur erläutert.

Das System besteht auf der Senderseite aus einer Videokamera 1 die eine Verbindung zu einem GSM/UMTS Mobilkommunikationsendgerät 2 besitzt. Idealerweise kann die Videokamera 1 ein GSM/UMTS Modul enthalten, oder es kann ein GSM/UMTS Endgerät 2 mit einer Videokamera 1 ausgerüstet sein.

Werden die Videokamera 1 und das GSM/UMTS Endgerät 2 als separate Einheiten vorgesehen, so kann eine Datenverbindung zwischen Videokamera 1 und GSM/UMTS Endgerät 2 drahtlos, z.B. über Bluetooth, erfolgen.

Die Einheit von Videokamera 1 und GSM/UMTS Endgerät 2 ist in der Lage, das von der Videokamera 1 aufgenommene Videosignal derart zu kodieren, dass es über die in GSM/UMTS standardisierten Übertragungskanäle, z.B. GPRS, HSCSD, UMTS Video Bearer, über das Mobilkommunikationsnetz 3 übertragen werden kann.

Auf der Empfangsseite steht mindestens ein GSM/UMTS Endgerät 4 zur Verfügung, welches die von der Senderseite übertragenden Video- und Audioinformationen aufbereiten und auf einem Display des Endgeräts 4 darstellen bzw. wiedergeben kann.

Weiterhin wird für jede Sendereinheit 2 und jede Empfangseinheit 4 ein Teilnehmeridentifikationsmodul 5 bzw. 6, z.B. in Form einer SIM-Karte benötigt. Die SIM Karten 5 bzw. 6 des Senders 2 bzw. der Sender und des Empfängers 4 werden bei dem Betreiber 11 des Mobilkommunikationsnetzes 3 einer gemeinsamen Teilnehmerbeziehung zugeordnet. Hierzu ist seitens des Mobilkommunikationsnetzes eine Datenbasis 7 vorgesehen, in welcher Teilnehmerdaten 8 bzw. 9, z.B. IMSI und/oder MSISDN, des Senders 2 und des Empfängers 4 gespeichert und einander zugeordnet sind. Versucht nun der Teilnehmer mit seinem Empfänger 4 eine Verbindung zu einem Sender 2 aufzubauen, so wird zunächst durch eine Prüfeinrichtung 10 des Netzbetreibers 11 überprüft, ob eine solche Berechtigung des Empfängers 4 zum Empfang der Videodaten des Senders 2 besteht. Dadurch kann sichergestellt werden, dass nur Übertragungen innerhalb dieser festgelegten Teilnehmerbeziehungen zugelassen werden. Übertragungen zu anderen Empfängern sind nur dann möglich, wenn die Sendereinheit 2 diesen externen (außerhalb der Teilnehmerbeziehung) Empfängern eine ausdrückliche Erlaubnis gibt. Diese Erlaubnis wird beim Betreiber 11 des Mobilkommunikationssystems hinterlegt.

Da die Ressourcen in den GSM/UMTS Netzen sehr beschränkt sind, und eine permanente Übertragung von Daten in den meisten Fallen auch gar nicht notwendig ist, erfolgt eine Übertragung vorzugsweise nur dann, wenn diese durch einen Trigger, d.h. ein auslösendes Ereignis, angestoßen wurde. Eine Triggerung kann sowohl vom Sender 2 als auch vom Empfänger 4 erfolgen.

Trigger können ausgelöst werden:
- In zeitlich periodischen Abständen
- Auf direkte Anforderung des Senders oder Empfängers
- Durch vom Sender oder Empfänger erfasste externe Signale und Parameter, z.B. eine Überschreitung von Schwellwerten, anhand einer erfassten Lautstärke, anhand der Erfassung von Bewegungen, anhand der Helligkeit, etc.

Wird der Sender 2 mit einem Akku bzw. einer Batterie betrieben, so ist es sinnvoll, Maßnahmen zur Stromeinsparungen vorzusehen. Zum Beispiel können nur Videodaten verarbeitet werden, wenn diese auch übertragen werden sollen. Zudem kann der Sender 2 in einem StandBy Modus betrieben werden, der durch einen Trigger aufgehoben wieder aktiv geschaltet werden kann.

Die verwendeten Endgeräte 2 und 4 können in unterschiedlichen Modi genutzt werden. Zum Beispiel in einem Überwachungsmodus mit Videoübertragung oder in einem "normalen" Mobilfunkbetrieb ohne Sicherheitsabfrage der Em pfangsberechtigung des Empfängers.

Für eine Nutzung des Verfahrens ist es notwendig, dass sich der Benutzer (Teilnehmer) eine Sendereinheit bestehend aus Videokamera 1 und GSM/UMTS Endgerät 2 und/oder eine Empfangseinheit bestehend aus GSM/UMTS Endgerät 4 mit Videodisplay kauft. Ferner muss der Teilnehmer entsprechende SIM-Karten 5 , 6 für Sender 2 und Empfänger 4 erwerben. Der Betreiber 11 des Mobilkommunikationssystems 3 trägt die den Teilnehmerverhältnissen zugeordneten IMSI / MSISDN-Nummern von Sender 2 und Empfänger 4 in eine Datenbank 7 ein und verknüpft somit die beiden Teilnehmerbeziehungen 8, 9 miteinander.

Ferner kann der Betreiber 11 des Mobilkommunikationssystems spezielle Routingregeln für IP-Adressen aus bestimmten Adressbereichen in entsprechende Router / Firewalls des Mobilkommunikationssystems eintragen. Routingregeln können sein, das zu einer bestimmten IP-Adresse aus dem Adressbereich nur eine weitere definierte IP Adresse den Zugang erhält.

Ein Aufbau einer Verbindung erfolgt zum Beispiel folgendermaßen:

Der Sender 2 und der Empfänger 4 buchen sich in GSM/UMTS Kommunikationsnetz 3 ein. Hierzu sind die auf den SIM-Karten 5, 6 gespeicherten Teilnehmerdaten notwendig. Die Teilnehmerdaten, z.B. IMSI und/oder MSISDN, werden in der Datenbank 10 gespeichert. Dem Sender 2 wird eine dynamische öffentliche IP-Adresse aus einem speziellem Adressbereich zugewiesen, die in der Datenbank 7 gespeichert wird. Der Empfänger 4 bekommt ebenfalls eine dynamische öffentliche IP-Adresse zugewiesen. Der Empfänger 4 kann nun einen bestimmten Sender 2 anhand der Daten der Datenbank 7 suchen bzw. auswählen. Die Prüfeinrichtung 10 überprüft anhand der Angaben in der Datenbank 7, ob der Empfänger 4 berechtigt ist, den ausgewählten Sender 2 zu empfangen. Ist der Empfänger 4 berechtigt, den Sender 2 zu empfangen, so kann er den Sender direkt ansprechen, z.B. durch einen Verbindungsaufbau zur temporären IP-Adresse oder Wahl der Mobilteilnehmer-Rufnummer des Senders 2. Ist die gewünschte Verbindung zum Sender 2 aufgebaut, überträgt dieser die gewünschten Video und Sound Informationen über das Mobilkommunikationssystem 3 zum Empfänger 4.

### Liste der Bezugszeichen

- 1: Videokamera
- 2: Mobilkommunikationsendgerät (Sender)
- 3: Mobilkommunikationsnetz
- 4: Mobilkommunikationsendgerät (Empfänger)
- 5: SIM
- 6: SIM
- 7: Datenbasis
- 8: Teilnehmerdaten
- 9: Teilnehmerdaten
- 10: Prüfeinrichtung
- 11: Betreiber

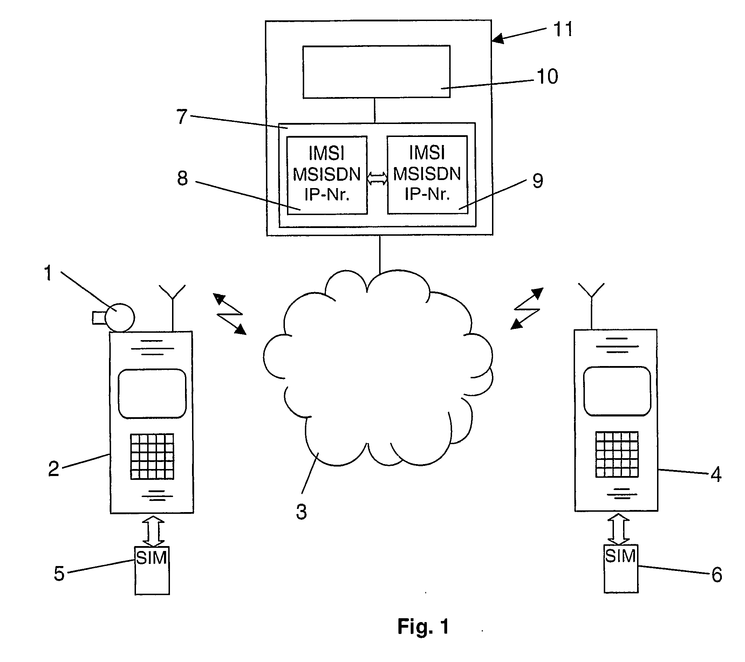

## Patentansprüche

1. Verfahren zur Video-Objektüberwachung unter Verwendung eines Mobilkommunikationssystems, wobei zur Übertragung von Videodaten über das Mobilkommunikationssystem (3) eine Verbindung zwischen einem mit einer Videokamera (1) ausgerüsteten Sender (2) und mindestens einem Empfänger (4) aufgebaut wird, wobei vor oder während des Verbindungsaufbaus durch eine Einrichtung des Mobilkommunikationssystems (3) geprüft wird, ob der Empfänger (4) zum Empfang von Videodaten des Senders (2) berechtigt ist,
**dadurch gekennzeichnet, dass** dem Sender (2) und dem Empfänger (4) jeweils ein Teilnehmerverhältnis (8 bzw. 9) des Mobilkommunikationssystems (3) und / oder eine temporäre IP-Adresse zugeordnet wird, wobei die beiden Teilnehmerverhältnisse und / oder IP Adressen in einer Datenbasis (7) des Betreibers (11) des Mobilkommunikationssystems miteinander verknüpft werden, und anhand der Verknüpfungsdaten eine Überprüfung der Berechtigung des Empfängers (4) zum Empfang der Videodaten des Senders (2) erfolgt, und dass in einer Datenbank (7) Routineregeln zur Übertragung der Videodaten zwischen Sender (2) und Empfänger (4) abgelegt werden, wobei für den Betrieb des Senders (2) und des Empfängers (4) jeweils ein Teilnehmeridentifikationsmodul SIM (5 bzw. 6) des Mobilkommunikationssystems (3) benötigt wird.

2. Verfahren nach Anspruch 1, **dadurch gekennzeichnet, dass** in der Datenbank (7) Angaben über die dem Sender (2) und dem Empfänger (4) jeweils zugeordnete internationale Mobilteilnehmerkennung (IMSI) und/oder Mobilteilnehmer-Rufnummer (MSISDN) und/oder IP-Adresse abgelegt werden.

3. Verfahren nach einem der vorhergehenden Ansprüche, **dadurch gekennzeichnet, dass** ein Verbindungsaufbau zwischen Sender (2) und Empfänger (4) durch Anwahl der jeweils zugeordneten Mobilteilnehmer-Rufnummer (MSISDN) oder einer IP-Adresse erfolgt.

4. Verfahren nach einem der vorhergehenden Ansprüche, **dadurch gekennzeichnet, dass** eine Zugangskontrolle zum Mobilkommunikationssystem (3) in Form einer Identifikation und Authentifikation des Senders (2) und des Empfängers (4) anhand von auf dem Teilnehmeridentifikationsmodul (5 bzw. 6) gespeicherten Daten durchgeführt wird.

5. Verfahren nach einem der vorhergehenden Ansprüche, **dadurch gekennzeichnet, dass** ein Verbindungsaufbau oder eine Datenübertragung nur auf Anforderung des Senders (2) und/oder des Empfängers (4) erfolgt.

6. Verfahren nach einem der vorhergehenden Ansprüche, **dadurch gekennzeichnet, dass** ein Verbindungsaufbau oder eine Datenübertragung zwischen Sender (2) und Empfänger (4) nur aufgrund eines auslösenden Ereignisses erfolgt.

7. Verfahren nach einem der vorhergehenden Ansprüche, **dadurch gekennzeichnet, dass** neben den Videodaten Audiodaten und/oder Daten von senderseitig vorgesehenen Sensoren übertragen werden.

8. Verfahren nach einem der vorhergehenden Ansprüche, **dadurch gekennzeichnet, dass** als Mobilkommunikationssystem (3) ein GSM- oder UMTS-Mobilkommunikationssystem verwendet wird.

9. Verfahren nach einem der vorhergehenden Ansprüche, **dadurch gekennzeichnet, dass** die Videodaten in Form der im verwendeten Mobilkommunikationssystem (3) standardisierten Übertragungsprotokolle übertragen werden.

10. Vorrichtung zur Durchführung des Verfahrens nach einem der Ansprüche 1 bis 9, **gekennzeichnet durch**:
einen mit einer Videokamera (1) ausgerüsteten Sender (2) zur Aufnahme von Videodaten,
mindestens einen Empfänger (4) zum Empfang der Videodaten,
ein Mobilkommunikationssystem (3) zur Übertragung der Videodaten zwischen dem Sender und dem Empfänger,
eine an das Mobilkommunikationssystem angebundene Datenbasis (7) zur Speicherung von den Sender und den Empfänger identifizierenden Daten, wobei in der Datenbasis (7) Routineregeln zur Übertragung der Videodaten zwischen Sender (2) und Empfänger (4) abgelegt sind,
eine Einrichtung (10) zur Überprüfung anhand der in der Datenbasis (7) gespeicherten Daten, ob der Empfänger zum Empfang der Videodaten des Senders berechtigt ist, und
ein für den Betrieb des Senders (2) und des Empfängers (4) jeweils aufweisendes Teilnehmeridentifikationsmodul SIM (5 bzw. 6) des Mobilkommunikationssystems (3).

## Claims

1. Method for video object monitoring using a mobile communications system, wherein for transmission of the video data over the mobile communications system (3) a connection is set up between a transmitter (2) equipped with a video camera (1) and at least one receiver (4), wherein before or during the connection set-up a check is made by a device in the mobile communications system (3) whether the receiver (4) is authorised to receive the video data from the transmitter (2), **characterised in that** a subscriber relationship (8 or 9) in the mobile communications system (3) and/or a temporary IP address is assigned in each case to the transmitter (2) and the receiver (4), wherein the two subscriber relationships and/or IP addresses are linked to one another in a database (7) of the operator (11) of the mobile communications system and on the basis of the linkage data a check on the authorisation of the receiver (4) to receive the video data from the transmitter (2) ensues, and that in a database (7) routine rules for transmitting the video data between the transmitter (2) and receiver (4) are deposited, wherein for the operation of the transmitter (2) and the receiver (4) in each case a subscriber identification module SIM (5 or 6) in the mobile communications system (3) is needed.

2. Method according to claim 1, **characterised in that** in the database (7) information about the international mobile subscriber identification (IMSI) and/or mobile subscriber call number (MSISDN) and/or IP address assigned in each case to the transmitter (2) and the receiver (4) are deposited.

3. Method according to any of the preceding claims, **characterised in that** call set-up between the transmitter (2) and receiver (4) ensues by dialling the respectively assigned mobile subscriber call number (MSISDN) or an IP address.

4. Method according to any of the preceding claims, **characterised in that** access control to the mobile communications system (3) in the form of identification and authentication of the transmitter (2) and the receiver (4) is carried out on the basis of data stored on the subscriber identification module (5 or 6).

5. Method according to any of the preceding claims, **characterised in that** call set-up or data transmission ensues only on request of the transmitter (2) and/or the receiver (4).

6. Method according to any of the preceding claims, **characterised in that** call set-up or data transmission between the transmitter (2) and receiver (4) ensues only on account of a triggering event.

7. Method according to any of the preceding claims, **characterised in that** in addition to the video data, audio data and/or data from sensors provided at the transmitter end are transmitted.

8. Method according to any of the preceding claims, **characterised in that** for the mobile communications system (3) a GSM or UMTS mobile communications system is used.

9. Method according to any of the preceding claims, **characterised in that** the video data are transmitted in the form of the standardised transmission protocols in the mobile communications system (3) used.

10. Device for carrying out the method according to any of claims 1 to 9, **characterised by** a transmitter (2) equipped with a video camera (1) for recording video data, at least one receiver (4) for receiving the video data, a mobile communications system (3) for transmitting the video data between the transmitter and the receiver, a database (7) linked to the mobile communications system for storing data identifying the transmitter and the receiver, wherein in the database (7) routine rules for transmitting the video data between the transmitter (2) and the receiver (4) are deposited, a device (10) for checking on the basis of the data stored in the database (7) whether the receiver is authorised to receive the video data from the transmitter, and a subscriber identification module SIM (5 or 6) in the mobile communications system (3) comprised in each case for the operation of the transmitter (2) and the receiver (4).

## Revendications

1. Procédé de surveillance vidéo d'objets au moyen d'un système de communication mobile, selon lequel pour transmettre des données vidéo par l'intermédiaire du système de communication mobile (3), une liaison est établie entre un émetteur (2) équipé d'une caméra vidéo (1) et au moins un récepteur (4), et selon lequel avant ou pendant l'établissement de la liaison, un dispositif du système de communication mobile (3) vérifie si le récepteur (4) est autorisé à recevoir des données vidéo de l'émetteur (2),
**caractérisé en ce qu'**un abonnement (respectivement 8 et 9) au système de communication mobile (3) et/ou une adresse IP temporaire sont attribués à l'émetteur (2) et au récepteur (4), les deux abonnements et/ou adresses IP étant combinés dans une base de données (7) de l'exploitant (11) du système de communication mobile, et un contrôle de l'autorisation du récepteur (4) à recevoir les données vidéo de l'émetteur (2) étant effectué à l'aide des données de combinaison, et **en ce que** des règles de routine pour la transmission des données vidéo entre émetteur (2) et récepteur (4) sont stockées dans une banque de données (7), le fonctionnement de l'émetteur (2) et du récepteur (4) nécessitant un module d'identification d'abonné SIM (respectivement 5 et 6) du système de communication mobile (3).

2. Procédé selon la revendication 1, **caractérisé en ce que** des indications sur l'identité internationale de l'abonné mobile (IMSI) et/ou sur le numéro d'abonné mobile (MSISDN) et/ou sur l'adresse IP attribués respectivement à l'émetteur (2) et au récepteur (4) sont stockées dans la banque de données (7).

3. Procédé selon l'une des revendications précédentes, **caractérisé en ce que** l'établissement d'une liaison entre émetteur (2) et récepteur (4) est réalisé en composant le numéro d'appel d'abonné mobile (MSISDN) attribué ou une adresse IP.

4. Procédé selon l'une des revendications précédentes, **caractérisé en ce qu'**un contrôle d'accès au système de communication mobile (3) est réalisé sous la forme d'une identification et d'une authentification de l'émetteur (2) et du récepteur (4) à l'aide de données mises en mémoire sur le module d'identification d'abonné (respectivement 5 et 6).

5. Procédé selon l'une des revendications précédentes, **caractérisé en ce que** l'établissement d'une liaison ou une transmission de données n'ont lieu qu'à la demande de l'émetteur (2) et/ou du récepteur (4).

6. Procédé selon l'une des revendications précédentes, **caractérisé en ce que** l'établissement d'une liaison ou une transmission de données entre émetteur (2) et récepteur (4) n'ont lieu que sur la base d'un événement déclencheur.

7. Procédé selon l'une des revendications précédentes, **caractérisé en ce qu'**en plus des données vidéo, des données audio et/ou des données de capteurs prévus côté émetteur sont transmises.

8. Procédé selon l'une des revendications précédentes, **caractérisé en ce qu'**on utilise comme système de communication mobile (3) un système de communication mobile GSM ou UMTS.

9. Procédé selon l'une des revendications précédentes, **caractérisé en ce que** les données vidéo sont transmises sous la forme des protocoles de transmission normalisés dans le système de communication mobile (3) utilisé.

10. Dispositif pour la mise en oeuvre du procédé selon l'une des revendications 1 à 9, **caractérisé par** :
un émetteur (2) équipé d'une caméra vidéo (1), pour enregistrer des données vidéo,
au moins un récepteur (4) pour recevoir les données vidéo,
un système de communication mobile (3) pour transmettre les données vidéo entre l'émetteur et le récepteur,
une base de données (7) reliée au système de communication mobile, pour mettre en mémoire des données qui identifient l'émetteur et le récepteur, des règles de routine pour la transmission des données vidéo entre émetteur (2) et récepteur (4) étant stockées dans la base de données (7),
un dispositif (10) pour contrôler, à l'aide des données mises en mémoire dans la base de données (7), si le récepteur est autorisé à recevoir les données vidéo de l'émetteur, et
un module d'identification d'abonné SIM (5 et 6) du système de communication mobile pour le fonctionnement de l'émetteur (2) et du récepteur (4), respectivement.
